Europäisches Patentamt

European Patent Office

Office européen des brevets

(11) Veröffentlichungsnummer : **0 157 386**
**B1**

# EUROPÄISCHE PATENTSCHRIFT

(45) Veröffentlichungstag der Patentschrift :
**10.02.88**

(51) Int. Cl.⁴ : **A 47 J 41/02**

(21) Anmeldenummer : **85103812.5**

(22) Anmeldetag : **29.03.85**

(54) **Isolierkanne.**

(30) Priorität : **02.04.84 DE 3412209**

(43) Veröffentlichungstag der Anmeldung :
**09.10.85 Patentblatt 85/41**

(45) Bekanntmachung des Hinweises auf die Patenterteilung : **10.02.88 Patentblatt 88/06**

(84) Benannte Vertragsstaaten :
**AT BE CH DE FR GB IT LI LU NL SE**

(56) Entgegenhaltungen :
**EP-A- 0 023 705**
**DE-B- 1 147 728**
**DE-B- 1 679 116**
**DE-U- 7 018 600**
**DE-U- 7 421 985**
**DE-U- 7 425 086**
**US-A- 2 812 116**

(73) Patentinhaber : **Rotpunkt Dr. Anso Zimmermann**
**Industriestrasse**
**D-6434 Niederaula / Bad Hersfeld (DE)**

(72) Erfinder : **Zimmermann, Anso, Dr.**
**Seilerweg 34**
**D-6430 Bad Hersfeld (DE)**

(74) Vertreter : **Körber, Wolfhart, Dr. et al**
**Patentanwälte Dipl.-Ing. H. Mitscherlich Dipl.-Ing. K.**
**Gunschmann Dr.rer.nat. W. Körber Dipl.Ing. J.**
**Schmidt-Evers Dipl.-Ing. W. Melzer Steinsdorfstrasse**
**10**
**D-8000 München 22 (DE)**

EP 0 157 386 B1

## Beschreibung

Gegenstand der Erfindung ist eine Isolierkanne nach dem Oberbegriff des Anspruchs 1 bzw. 4.

Eine Isolierkanne dieser Bauarten ist im DE-U-74 21 985 beschrieben und dargestellt. Bei diesen bekannten Bauarten ist der Isoliereinsatz der Isolierkanne zwischen dem Gehäuseaufsatz und dem Gehäuseboden gehalten, wobei die Füllöffnung im Gehäuseaufsatz angeordnet ist und der Ausgießer einstückig vom Gehäuseaufsatz ausgeht. Um die Bauhöhe zu verringern, ist ein Ausschnitt am oberen Rand des Gehäusemantels vorgesehen, durch den sich der Ausgießer radial auswärts erstreckt. Durch diese Ausgestaltung kann die Bauhöhe der Isolierkanne zwar um ein beträchtliches Maß reduziert werden, jedoch wird durch den Ausschnitt die Festigkeit des Gehäusemantels erheblich beeinträchtigt, und zwar insbesondere im Bereich des Randes beiderseits des Ausschnitts, Zwecks Stabilisierung dieser Randbereiche ist bei der bekannten Ausgestaltung der obere Rand des Gehäusemantels einwärts umgebördelt, und er faßt in eine oberseitig offene Ringnut am Gehäuseaufsatz ein.

Bei einer anderen, auf dem Markt bekannten Isolierkanne ist der obere Rand des Gehäusemantels ebenfalls eingebördelt, und es sind am in den Gehäusemantel einfassenden Gehäuseaufsatz Verrastungsnasen vorgesehen, die den einwärts gerichteten freien Schenkel der Bördelung hinterfassen. Es hat sich gezeigt, daß selbst bei einer solchen Befestigung die Stabilität der Isolierkanne im oberen Bereich erheblich beeinträchtigt ist, weil die Verrastungsnasen aus Montagegründen nicht so ausgebildet werden können, daß sie den Rand des Gehäusemantels radial einwärts festlegen.

Der Erfindung liegt die Aufgabe zugrunde, eine einfache Ausgestaltung für eine Isolierkanne der eingangs bezeichneten Bauart zu finden, die zu einer Stabilisierung der Isolierkanne im Bereich des Ausschnitts und zu einer Stabilisierung der Befestigung zwischen dem Gehäuseaufsatz und dem Gehäusemantel führt.

Diese Aufgabe wird durch die Merkmale des Anspruchs 1 bzw. durch die Merkmale des alternativen Anspruchs 4 gelöst.

Beiden Lösungen ist der Vorteil gemeinsam, daß die durch die Einarbeitung des Ausschnitts fehlende Brücke bzw. die geschlossene Ringform des oberen Randes des Gehäusemantels ersetzt wird. Bei der Ausgestaltung gemäß Anspruch 1 sind beiderseits des Ausschnitts nahe dem Übergang zwischen Gehäusemantel und Ausschnitt auf den einander zugewandten Flächen des Gehäusemantels und des Gehäuseaufsatzes Ansätze und diesen zugeordnete Ausnehmungen vorgesehen, die quer zur Umfangsrichtung verlaufende aneinander anliegende Flächen bilden. Durch diese Ausgestaltung werden die Randbereiche beiderseits des Ausschnitts zumindest in Umfangsrichtung formschlüssig am Gehäuseaufsatz festgelegt, so daß diese Bereiche bzw. Ecken des Gehäuserandes nicht ausbiegen können. Der Gehäuserand erhält somit die Stabilität, die er dann aufweisen würde, wenn der Gehäuserand in sich, d. h., ringförmig geschlossen wäre. Bei dieser Lösung ist es prinzipiell unerheblich, ob der Gehäuseaufsatz den Gehäuserand innenseitig oder außenseitig umgreift. Die durch die erfindungsgemäße Ausgestaltung erreichbare Stabilisierung liegt auch dann vor, wenn der Gehäuseaufsatz den Gehäuserand weder innenseitig noch außenseitig übergreift, sondern lediglich auf dem Rand aufliegt.

Die gleichen Vorteile sind auch durch die Ausgestaltung gemäß Anspruch 4 erreichbar. Bei dieser Lösung wird die fehlende Brücke im Bereich des Ausschnitts jedoch nicht direkt ersetzt, sondern die durch den Ausschnitt gebildeten freien Ecken des Gehäuserandes werden durch den innenseitigen und außenseitigen Umgriff durch den Gehäuseaufsatz daran gehindert, radial bzw. in Umfangsrichtung auszuweichen. Es hat sich bei Versuchen gezeigt, daß es bei einer üblichen Ausgießergrößen entsprechenden Höhe des Ausschnitts ausreicht, den Gehäuserand beiderseits des Ausschnitts auf einem radial auswärts offenen Winkel von wenigstens etwa 45° innenseitig und außenseitig zu übergreifen. Durch diesen Übergriff werden die labilen Zonen beiderseits des Ausschnitts stabilisiert. Es ist natürlich nicht schädlich, wenn das erfindungsgemäße Übergreifen des Gehäuserandes auf einem größeren Winkel als 45° erfolgt.

Die Ausbildung gemäß Anspruch 2 ist aus Herstellungsgründen von Vorteil. Bei dieser Ausbildung können die Zapfen leicht und preiswert durch einstückiges Anformen des aus Kunststoff bestehenden Gehäuseaufsatzes gebildet werden. Die korrespondierenden Vertiefungen oder Löcher können einfacher im Gehäusemantel eingebracht werden, beispielsweise durch Tiefziehen oder durch Stanzen.

Die Ausgestaltung nach Anspruch 3 ergibt einfache Formgestaltungen, die auch aus Montagegründen von Vorteil sind.

Nachfolgend werden zwei Ausführungsbeispiele der Erfindung anhand einer vereinfachten Zeichnung näher beschrieben.

Es zeigen

Fig. 1 eine erfindungsgemäß ausgestaltete Isolierkanne in der Seitenansicht ;

Fig. 2 einen lotrechten Teilschnitt nach der Linie II-II in Fig. 1 ;

Fig. 3 eine Seitenansicht der Isolierkanne mit Blickrichtung auf den Ausgießer ;

Fig. 4 einen Teilschnitt nach der Linie IV-IV in Fig. 3 ;

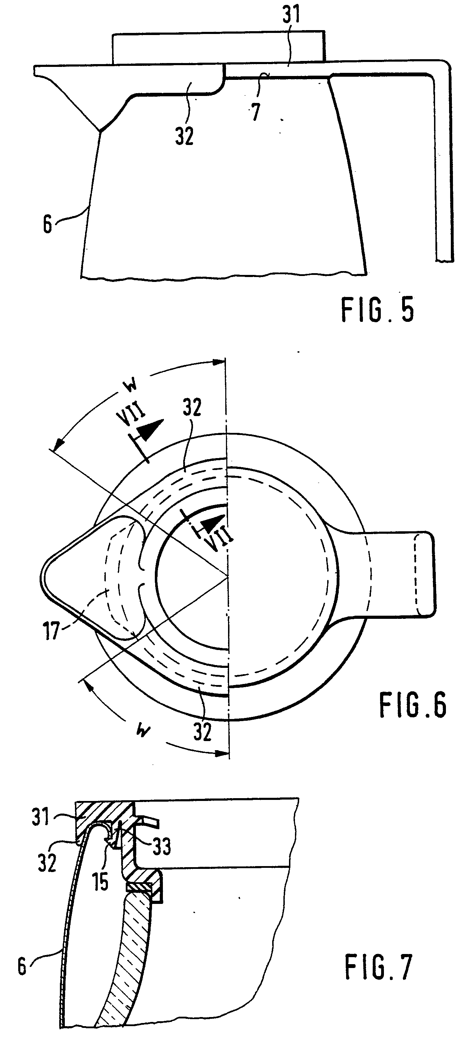

Fig. 5 den oberen Bereich einer Isolierkanne der zweiten Ausführungsform in der Seitenansicht ;

Fig. 6 die Isolierkanne nach Fig. 5 in der Draufsicht ;

Fig. 7 einen Teilschnitt nach Linie VII-VII in Fig.

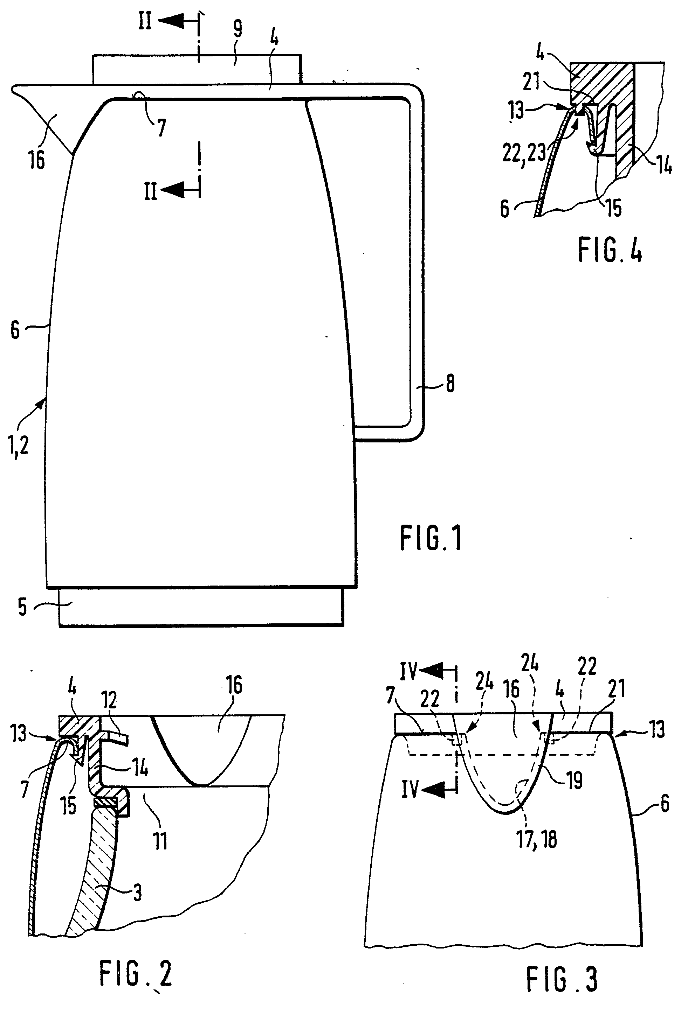

6. Die in Fig. 1 allgemein mit 1 bezeichnete Isolierkanne weist ein Schutzgehäuse 2 auf, in dem ein nur in Fig. 2 dargestellter Isoliereinsatz 3 angeordnet und zwischen einem Gehäuseaufsatz 4 und einem Gehäuseboden 5 gehalten ist. Zwischen dem Gehäuseaufsatz 4 und dem Gehäuseboden 5 erstreckt sich ein Gehäusemantel 6, auf dessen oberen Rand 7 der Gehäuseaufsatz 4 aufliegt. Vom Gehäuseaufsatz 5 geht einstückig ein Griff 8 aus, der an seinem unteren Ende in nicht dargestellter Weise am Gehäusemantel 6 befestigt ist. Die Isolierkanne 1 weist auch einen nur in Fig. 1 dargestellten Deckel 9 auf, mit dem die Füllöffnung 11 geschlossen werden kann, die im Gehäuseaufsatz 4 angeordnet ist. der Deckel 9 ist ein sog. Schraubdeckel, dem am Gehäuseaufsatz 4 segmentförmig angeordnete Gewindegänge 12 zugeordnet sind.

Fig. 2 zeigt die bekannte Ausführungsform, bei der der Gehäusemantel 6 im Bereich seines Randes 7 einwärts gebördelt ist. Die Bördelung ist mit 13 bezeichnet. Der Gehäuseaufsatz 4 faßt mit einem unterseitigem Ansatz 14 in den Gehäusemantel 6 ein und ist durch Verrastungsnasen 15, die den freien Schenkel der Bördelung 13 untergreifen am Gehäusemantel 6 festgelegt.

An den Gehäuseaufsatz 4 ist einstückig ein Ausgießer 16 angeformt, der sich radial auswärts durch einen in Fig. 3 mit gebrochenen Linien dargestellten Ausschnitt 17 des Gehäusemantels 6 erstreckt und den Rand 18 des Ausschnitt 17 mit einer Schulter 19 geringfügig übergreift. Der Gehäusemantel 6 besteht aus Metallblech, und der Gehäuseaufsatz 4 besteht einschließlich der einstückig angeformten Verrastungsnasen 15 aus Kunststoff.

Ein Beispiel der erfindungsgemäßen Ausgestaltung ist aus den Fig. 3 und 4 zu entnehmen. Auf der dem Rand 7 zugewandten Fläche 21 des Gehäuseaufsatzes 4 sind zwei einstückig angeformte Zapfen 22 angeordnet, deren Abstand an zwei die Zapfen 22 etwa schließend aufnehmende Löcher 23 angepaßt ist, die sich im Schutzmantel 6, und zwar im oberen Bereich der Bördelung 13 beiderseits des Ausschnitts 17, und zwar nahe der durch ihn gebildeten freien Ecken 24 des Randes 7 befinden. Durch den Eingriff der Zapfen 22 in die Löcher 23 wird die durch den Ausschnitt 17 bedingte Labilität des Schutzmantels 6 beiderseits des Ausschnitts 17 aufgehoben. Die durch den Ausschnitt 17 fehlende Brücke im Rand 7 wird durch den Gehäuseaufsatz 4 ersetzt, und die freien Ecken 24 sowie die sich daran anschließenden Zonen des Randes 7 werden daran gehindert, sowohl radial als auch in Umfangsrichtung auszuweichen.

In der Fig. 4 sind die Einzelteile etwas vergrößert dargestellt.

Beim zweiten Ausführungsbeispiel umgreift der hier mit 31 bezeichnete Gehäuseaufsatz den Rand 7 des Gehäusemantels 6 beiderseits des Ausschnitts 17 auf einem Winkel w von jeweils etwa 45°. Der Umgriff erfolgt außenseitig durch eine vom Gehäuseaufatz 4 ausgehende Lippe 32 und innenseitig durch die aus dem ersten Ausführungsbeispiel schon bekannten Verrastungsnasen 15, die an einem unterseitigen, dünnwandigen Ringvorsprung 33 des Gehäuseaufsatzes 31 ausgebildet sind.

Aufgrund des beiderseitigen Umgriffs wird der Rand 7 des Gehäusemantels 6 daran gehindert, im Bereich seiner labilen Zone beiderseits des Ausschnitts 17 sowohl radial als auch in Umfangsrichtung nachzugeben.

Es ist durch Versuche ermittelt worden, daß bei einer üblichen Ausgießerquerschnitten entsprechenden Tiefe des Ausschnitts 17, der Umgriff auf einem Winkel von jeweils 45° ausreicht. Bei erheblich tiefer eingeschnittenen Ausschnitten 17 wird ein größerer Umgreifwinkel w erforderlich sein. Es ist natürlich auch möglich, den Rand 7 auf seiner ganzen Länge, also rundherum zu umgreifen. Dabei bedarf es eines innenseitigen Umgriffs nur im labilen Bereich beiderseits des Ausschnitts 17.

**Patentansprüche**

1. Isolierkanne mit einem Schutzgehäuse (2), in dem ein Isoliereinsatz (3) angeordnet ist, der zwischen einem Gehäuseaufsatz (4) und einem Gehäuseboden (5) gehalten ist, mit einem Griff (8), einer durch einen Deckel (9) verschließbaren Öffnung und einem an dem Gehäuse aufsatz (4) einstückig angeformten Ausgießer (16), der durch einen Ausschnitt (17) im Gehäusemantel (6) des Schutzgehäuses (2) radial herausgeführt ist, dadurch gekennzeichnet, daß beiderseits des Ausschnitts (17) nahe dem Übergang (24) zwischen Gehäusemantel (6) und Ausschnitt (17) auf den einander zugewandten Flächen (13, 21) des Gehäusemantels (6) und des Gehäuseaufsatzes (4) Ansätze (22) und diesen zugeordnete Ausnehmungen (23) vorgesehen sind, die quer zur Umfangsrichtung verlaufende aneinander anliegende Flächen bilden, die den Gehäuseaufsatz (4) und den Gehäusemantel (6) zumindest in Umfangsrichtung formschlüssig aneinander festlegen.

2. Isolierkanne nach Anspruch 1, dadurch gekennzeichnet, daß der Gehäuseaufsatz (4) aus Kunststoff besteht, daß der Gehäusemantel (6) aus Metall besteht und daß die Ansätze einstückig an dem Gehäuseaufsatz 4 angeformte Zapfen (22) sind, die in Vertiefungen oder Löcher (23) des Gehäusemantels (6) einfassen.

3. Isolierkanne nach Anspruch 1 oder 2, dadurch gekennzeichnet, daß der den Gehäuseaufsatz 4 tragende Rand (7) des Gehäusemantels (6) einwärts gebördelt ist, und die Ansätze bzw. Ausnehmungen (22, 23) im oberen Krümmungsbereich der Bördelung (13) angeordnet sind.

4. Isolierkanne nach dem Oberbegriff des Anspruchs 1, wobei der Gehäuseaufsatz (4) den oberen Rand des Gehäusemantels (6) zumindest im Bereich des Ausgießers (16) innenseitig umgreift, dadurch gekennzeichnet, daß eine vom Gehäuseaufsatz (4) ausgehende Lippe (32) den Rand (7) des Gehäusemantels (6) beiderseits des Ausschnitts (17) um einen radial auswärts offenen Winkel (w) von etwa 45° außenseitig umgreift.

about 45°.

## Claims

1. An insulating jug having a protective housing (2), in which is arranged an insulating insert (3) held between a housing top part (4) and a housing bottom part (5), having a handle (8), an opening which is sealable by a lid (9) and a pourer (16) which is formed on and in one piece with the housing top part (4) and which passes radially out through a cut-out portion (17) in the housing casing (6) of the protective housing, characterised by the provision, on both sides of the cut-out portion (17) near the transition between the housing casing (6) and the cut-out portion (17), on the facing surfaces (13, 21) of the housing casing (6) and of the housing top part (4), of extensions (22) and corresponding recesses (23) which form adjoining surfaces extending transversely to the peripheral direction, which hold the housing top part (4) and the housing casing (6) together, at least in the peripheral direction, in a form-locking manner.

2. An insulating jug according to claim 1, characterised in that the housing top part (4) consists of plastics material ; in that the housing casing (6) consists of metal and that the extensions are pegs (22) which are formed on and in one piece with the housing top part (4) and which engage in recesses or holes (23) in the housing casing (6).

3. An insulating jug according to claim 1 or claim 2, characterised in that the edge (7) of the housing casing (6) which carries the housing top part (4) is inwardly flanged, and the extensions or recesses (22, 23) are arranged in the upper curved area of the flange (13).

4. An insulating jug according to the precharacterising part of claim 1, in which the housing top part (4) encompasses the top edge of the housing casing (6) on the inside at least in the region of the pourer (16), characterised in that a lip (32) extending from the housing top part (4) encompasses the edge (7) of the housing casing (6) on the outside on both sides of the cut-out portion (17) through a radially outwards open angle (w) of

## Revendications

1. Bouteille isolante comportant un corps protecteur (2), dans lequel est placé un élément isolant (3), qui est maintenu entre un dessus de corps (4) et un fond de corps (5), comportant aussi une poignée (8), une ouverture pouvant être fermée par un couvercle (9) et un bec verseur (16), qui est formé d'une pièce sur le dessus de corps (4) et fait saillie radialement dans la chemise (6) du corps protecteur (2), à l'endroit d'une découpe (17), caractérisée en ce que des deux côtés de la découpe (17), près de la transition (24) entre la chemise de corps (6) et la découpe (17), il est prévu, sur les surfaces (13, 21), tournées l'une vers l'autre, de la chemise de corps (6) et du dessus de corps (4), des saillies (22) et des évidements (23) correspondant à ceux-ci, qui forment des surfaces qui sont jointives entre elles perpendiculairement au pourtour et fixent avec une solidarité géométrique, au moins dans le sens du pourtour, le dessus de corps (4) et la chemise de corps (6).

2. Bouteille isolante suivant la revendication 1, caractérisée en ce que le dessus de corps (4) est en métal et que les saillies sont des tenons (22), qui sont formés d'une pièce sur le dessus de corps (4) et pénètrent dans des enfoncements ou trous (23) de la chemise de corps (6).

3. Bouteille isolante suivant la revendication 1 ou 2, caractérisée en ce que le bord (7) de la chemise de corps (6) portant le dessus de corps (4) est rabattu vers l'intérieur et que les saillies et/ou évidements (22, 23) sont dans la zone supérieure de courbure du collet rabattu (13).

4. Bouteille isolante suivant le préambule de la revendication 1, le dessus de corps (4) entourant intérieurement le bord supérieur de la chemise de corps (6) au moins dans la zone du bec verseur (16), caractérisée en ce qu'une lèvre (32), provenant du dessus de corps (4), entoure extérieurement le bord (7) de la chemise de corps (6), des deux côtés de la découpe (17), d'un angle w d'environ 45°, qui est ouvert radialement vers l'extérieur.

FIG.1

FIG.2

FIG.3

FIG.4

1

31

32

7

6

**FIG. 5**

W

VII

32

VII

17

W

32

**FIG. 6**

31

32

33

15

6

**FIG. 7**